# EUROPÄISCHE PATENTSCHRIFT

(11) **EP 2 572 946 B1**
(45) Veröffentlichungstag und Bekanntmachung des Hinweises auf die Patenterteilung: **18.06.2014**
(21) Anmeldenummer: 12006624.6
(22) Anmeldetag: 20.09.2012
(51) Int. Cl.: B60R 25/02

(54) **Verriegelungsschutz für eine elektrische Lenkverriegelung**
Locking safety for an electric steering lock
Sécurisation de verrouillage pour un verrouillage électrique de direction

(30) Priorität: 20.09.2011 DE 102011113669; 16.12.2011 DE 102011121428
(43) Veröffentlichungstag der Anmeldung: 27.03.2013
(73) Patentinhaber: Huf Hülsbeck & Fürst GmbH & Co. KG, 42551 Velbert (DE)
(72) Erfinder: Indinger, Max, 82131 Gauting (DE)
(74) Vertreter: Schäfer, Matthias W.

(56) Entgegenhaltungen:
- EP-A1- 1 232 921
- EP-A2- 1 176 065
- DE-A1- 10 356 660

## Beschreibung

### Gebiet der Erfindung

Die Erfindung betrifft einen Verriegelungsschutz für eine elektrische Lenkverriegelung für ein Fahrzeug mit einem elektrisch angetriebenen Antriebsrad und einem Sperrbolzen. Dabei wird der Sperrbolzen durch eine Sperrfläche des Antriebsrads in einem unverriegelten Zustand der Lenkverriegelung gesichert.

### Stand der Technik

Aus dem bekannten Stand der Technik sind eine Vielzahl von Lenkverriegelungen bekannt, die jedoch in der Regel keinen Verriegelungsschutz zur Vermeidung einer unfreiwilligen Sperrung einer Lenkspindel, z.B. während der Fahrt, aufweisen.

Die DE 103 56 660 offenbart eine Kurvenscheibe, die ein Verriegelungsteil sowohl beim Verriegeln als auch beim Entriegeln formschlüssig zwangssteuert. Das Verriegelungsteil weist zur Kurvenscheibe hin eine offene korrespondierende Gegenkontur auf. Hierbei sind Nuten hinsichtlich der Querschnittsfläche kongruent zum Sperransatz ausgebildet. In einer zweiten Ausführungsform ist die Kurvenscheibe als Wulstkurvenscheibe (außenliegende Hubkurve) ausgebildet, bei der ein axial vorspringender Wulst zwischen zwei an dem Verriegelungsteil ausgebildeten Vorsprüngen formschlüssig eingreift und wiederum sowohl beim Verriegeln als auch beim Entriegeln formschlüssig zwangssteuert. Hierbei ist ein Sperrelement axial vom Antriebsrad ausgebildet.

EP1176065A offenbart eine elektrische Lenkverriegelung mit einem Verriegelungsschutz, wobei die Lenkverriegelung ein elektrisch angetriebenes Antriebsrad zur Betätigung eines translatorisch bewegbaren Sperrbolzens aufweist, wobei der Verriegelungsschutz folgendes aufweist:
ein Sperrelement, eine spiralförmig ausgebildete Hubkurve zum Entriegeln des Sperrbolzens und ein Sicherungselement, das an dem Sperrbolzen angeordnet ist, wobei der Sperrbolzen zwischen einer Sperrstellung und einer Freigabestellung bewegbar ist und wobei das Sperrelement an dem Antriebsrad als radial vom Antriebsrad hervorstehende Sperrfläche ausgebildet ist und in der Freigabestellung mit dem an dem Sperrbolzen angeordneten Sicherungselement in Eingriff steht, um ein unbeabsichtigtes Verriegeln der Lenkverriegelung zu verhindern, wobei das Sperrelement zwischen einer Sperrstellung und einer Freigabestellung beweglich ist und die Hubkurve an dem Antriebsrad angeordnet ist.

Der Erfindung liegt daher die Aufgabe zugrunde, einen Verriegelungsschutz für eine elektrische Lenkverriegelung für ein Fahrzeug zur Verfügung zu stellen, welche die Nachteile des Standes der Technik vermeidet, die kostengünstig zu fertigen ist, eine kompakte Bauform aufweist, kostengünstig, schnell und bei sicherer Fehlervermeidung zu montieren und für unterschiedlichste Fahrzeugtypen aufgrund einer unterschiedlichen Kinematik verwendbar ist.

Diese Aufgabe wird durch eine elektrische Lenkverriegelung für ein Fahrzeug mit den Merkmalen des Anspruchs 1 gelöst. Vorteilhafte Ausführungsformen und Weiterbildungen der Erfindung werden in den Unteransprüchen beschrieben.

### Kurze Beschreibung der Zeichnungen

Nachfolgend wird die Erfindung anhand eines Ausführungsbeispiels zusammen mit den beigefügten Zeichnungen erläutert. Dazu zeigt:
Figur 1 eine schematische Darstellung eines Verriegelungsschutzes einer nicht beanspruchten elektrischen Lenkverriegelung, wobei die Sperrfläche mit der Sicherungsnut nicht im Eingriff steht;
Figur 2 eine schematische Darstellung des Verriegelungsschutzes nach Figur 1, wobei die Sperrfläche mit der Sicherungsnut im Eingriff steht;
Figur 3 eine schematische Darstellung eines Verriegelungsschutzes einer elektrischen Lenkverriegelung gemäß einer Ausführungsform der vorliegenden Erfindung, wobei die Sperrfläche mit der Sicherungsnut nicht im Eingriff steht,
Figur 4 eine schematische Darstellung eines Verriegelungsschutzes nach Figur 3, wobei die Sperrfläche mit der Sicherungsnut im Eingriff steht; und
Figur 5 eine räumliche Darstellung des Verriegelungsschutzes einer elektrischen Lenkverriegelung gemäß der zweiten Ausführungsform.

Nachfolgend beziehen sich Richtungsangaben auf die Zeichnungsebene sofern sich aus dem Text nichts anderes ergibt.

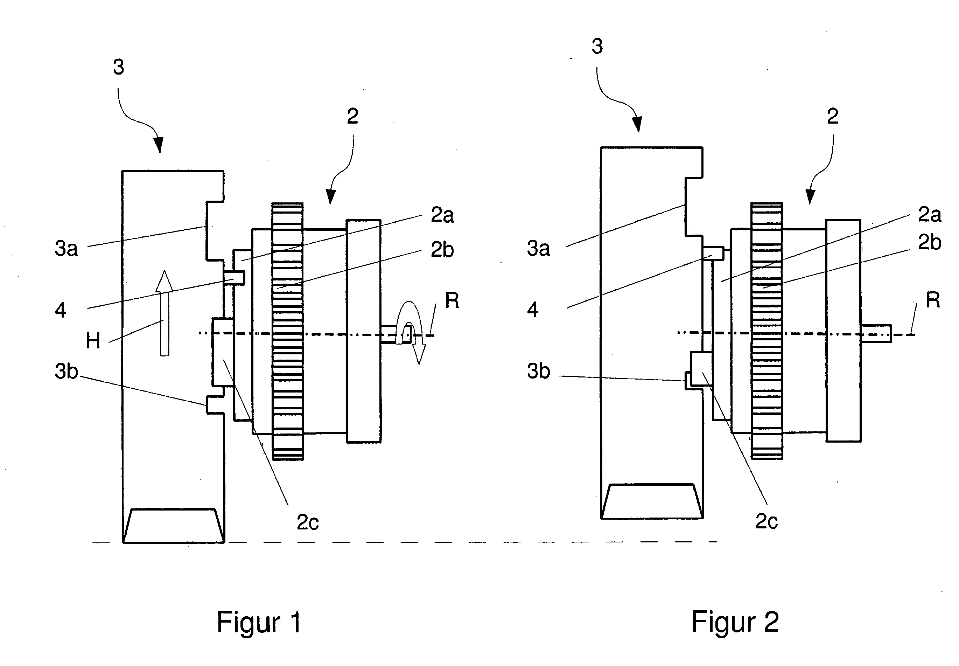

Die Figuren 1 und 2 zeigen schematisch eine elektrische Lenkverriegelung 1 für ein Fahrzeug mit einem elektrisch angetriebenen Antriebsrad 2 und einem Sperrbolzen 3.

In der nicht beansprüchten Verriegelung ist die Drehachse R des Antriebsrads 2 senkrecht zu einer Erstreckungsrichtung des Sperrbolzens 3 ausgerichtet. Eine Hubbewegung H des Sperrbolzens 3 erfolgt somit senkrecht zur Drehachse R des Antriebsrads 2. In einem ersten Abschnitt des Antriebsrads 2 ist eine sich im Wesentlichen axial erstreckende Sperrfläche 2c, als ringsegmentförmiger, hervorstehender Abschnitt, ausgebildet. Diese Sperrfläche 2c ist in dieser Ausführungsform vorzugsweise integral am Antriebsrad 2 ausgebildet und erstreckt sich über einen Bogenwinkel von 60°. Die Wandstärke entspricht hierbei im Wesentlichen einem zu sichernden Eingriffsgegenstück. Des Weiteren ist in diesem ersten Abschnitt auf einer Außenfläche des Antriebsrads 2 eine Nocke 2a zur Ansteuerung eines Steuerbolzens 4 integral ausgebildet. Der Steuerbolzen 4 ist mit dem Sperrbolzen 3 kraftschlüssig verbunden und überträgt die Hubbewegung der Nocke 2a an den Sperrbolzen 3. In einem mittleren Abschnitt auf der Außenfläche des Antriebsrads 2 ist eine Verzahnung 2b radial ausgebildet. Dadurch ist ein verzahnender Eingriff mit einem schraubenförmig ausgebildeten Getrieberad möglich. Diese Verzahnung 2b ist ebenfalls integral mit dem Antriebsrad 2 ausgebildet. Angrenzend an den mittleren Abschnitt sind in einem oberen Abschnitt des Antriebsrads 2 Impulsgeber angeordnet und ausgebildet, um den Drehwinkel bzw. die aktuelle Stellung des Antriebsrads 2 und somit auch die aktuelle Stellung der Hubkurve zu erfassen. Dadurch kann eindeutig eine Aussage über den Ver- bzw. Entriegelungszustand getroffen werden.

Der Sperrbolzen 3 wird in einer hier nicht dargestellten Sperrbolzenlagerung im Wesentlichen spielfrei und translatorisch entlang seiner Hochachse geführt. Dabei weist der Sperrbolzen 3 im Wesentlichen einen länglichen, rechteckförmigen Querschnitt mit entsprechender Längs- und Querachse auf. Die Stirnseiten sind dabei im Wesentlichen leicht nach außen gewölbt, d.h. konvex ausgebildet. Die beiden Seitenflächen sind plan ausgebildet. In einem oberen Abschnitt, auf einer der gewölbten Flächen, ist eine Freilaufnut 3a ausgebildet. Dabei entspricht die Länge bzw. Höhe der Freilaufnut 3a dem Hub der Nocke 2a des Antriebsrads 2 und ermöglicht eine translatorische Bewegung des Sperrbolzens 3, wenn die Sperrfläche 2c des Antriebsrads 2 in Richtung des Sperrbolzens 3 während eines Ver- bzw. Entriegelungsvorgangs geschwenkt wird und die Freilaufnut 3a durchquert. Unterhalb dieser Freilaufnut 3a weist der Sperrbolzen 3 eine Sicherungsnut 3b auf. In einer entriegelten Position der Lenkverriegelung 3 befindet sich der Sperrbolzen 3 über die Sicherungsnut 3b in Eingriff mit der Sperrfläche 2c des Antriebsrads 2. Aufgrund der Drehbewegung des Antriebsrads 2 wird der Verriegelungsschutz 2c durch ein Einschwenken der Sperrfläche 2c in Eingriff mit der Sicherungsnut 3b gebracht. Im Wesentlichen entspricht die Länge bzw. Höhe der Sicherungsnut 3b der Wandstärke der Sicherungsfläche 2c zuzüglich eines Spiels. Durch den Eingriff der Sperrfläche 2c in die Sicherungsnut 3b wird eine mechanische Verriegelung zwischen dem Sperrbolzen 3 und dem Antriebsrad 2 bewirkt und somit eine Fehlfunktion der elektrischen Lenkverriegelung, beispielsweise ein plötzliches Verriegeln während der Fahrt, verhindert. An einem unteren Abschnitt des Sperrbolzens 3 befindet sich ein im Wesentlichen keil- bzw. kufenförmiger Abschnitt. Dieser Abschnitt befindet sich zur Verriegelung im Eingriff mit einer Lenksäule. Dieser keilförmige Abschnitt ist dabei zu einer (nicht gezeigten) Lenksäulenachse ausgerichtet, um einen optimalen verriegelnden Eingriff in einen an der Lenksäule angebrachten Nutenkranz bewirken zu können. Zur Verbesserung der Maßhaltigkeit der angewandten Geometrien bei gleichzeitiger Massenproduktion wird der Sperrbolzen 3 im vorliegenden Ausführungsbeispiel im Sinterverfahren aus einem Sinterstahl wie D32 gefertigt.

In montiertem Zustand befindet sich der Steuerbolzen 4 im Eingriff mit dem Antriebsrad 2 durch die Nocke 2a. Der Steuerbolzen 4 ist mit dem Sperrbolzen 3 in einem mittleren Abschnitt kraftschlüssig verbunden und wandelt die Drehbewegung des Antriebsrads 2 mittels der Nocke 2a und dem Steuerbolzen in eine translatorische Bewegung des Sperrbolzens 3 um.

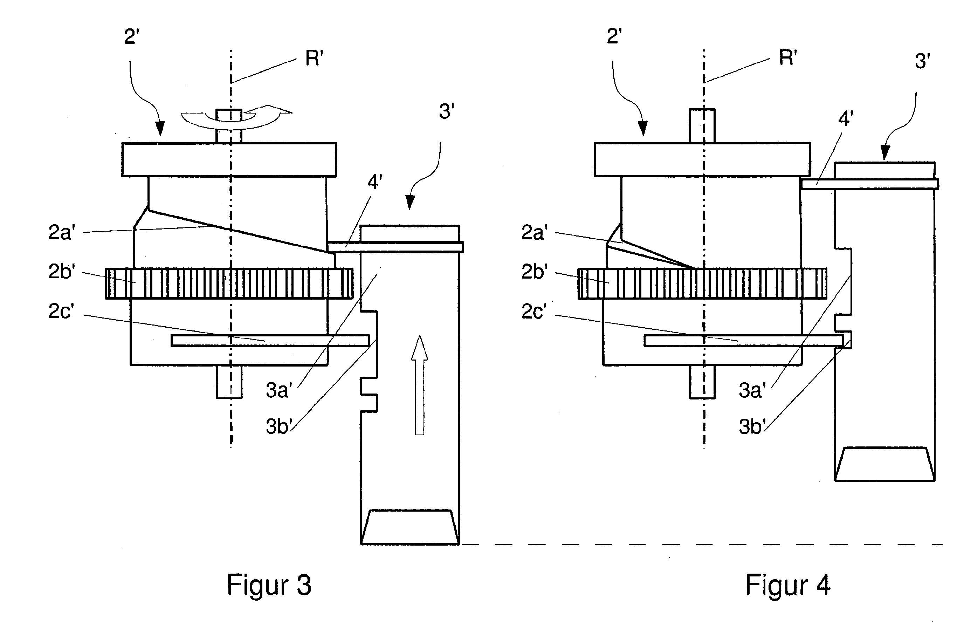

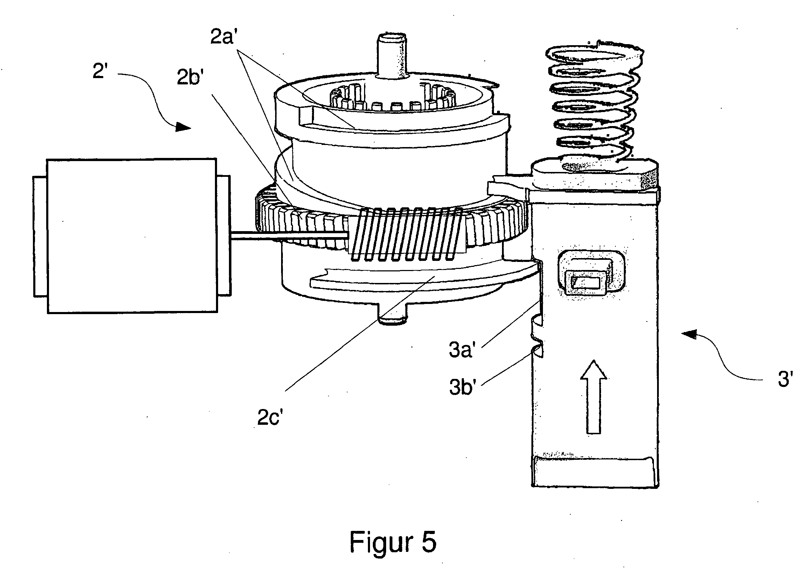

In der Ausführungsform der Figuren 3-5 ist der Sperrbolzen 3' in Längsachsenrichtung parallel zu einer Drehachse R' eines Antriebsrads 2' ausgerichtet. Die Hubbewegung des Sperrbolzens 3' erfolgt somit ebenfalls parallel zur Drehachse R'. Auf einer Außenfläche des Antriebsrads 2' ist in einem unteren Abschnitt eine bogenförmige, im wesentlichen senkrecht zum Sperrbolzen 3' ausgerichtete fächerförmige Sperrfläche 2c' vorgesehen. Diese Sperrfläche 2c' ist in dieser Ausführungsform vorzugsweise integral am Antriebsrad 2' ausgebildet und erstreckt sich über ein Bogensegment von 60° in radialer Richtung. Die Wandstärke entspricht hierbei im Wesentlichen einem zu sichernden Eingriffsgegenstück. In einem mittleren Abschnitt auf der Außenfläche des Antriebsrads 2' ist eine Verzahnung 2b' radial ausgebildet. Dadurch ist ein verzahnender Eingriff mit einem schraubenförmig ausgebildeten Getrieberad möglich. Diese Verzahnung 2b' ist ebenfalls integral mit dem Antriebsrad 2' ausgebildet. Dabei ist der Durchmesser der Verzahnung 2b' geringer als der Durchmesser der Sperrfläche 2c', so dass die Sperrfläche 2c' radial überstehend gegenüber der Verzahnung 2b' ausgeführt ist. Angrenzend an den mittleren Abschnitt ist in einem oberen Abschnitt des Antriebsrads 2' eine sich um mehr als 360° erstreckende Hubkurve 2a' spiralförmig ausgebildet. D.h., das Antriebsrad 2' benötigt mehr als eine Umdrehung, um einen vollen Hub des Sperrbolzens 3' auszuführen. Diese Hubkurve 2a' erstreckt sich wiederum an der Außenfläche des Antriebsrads 2' und ist damit integral ausgebildet. Des weiteren sind in diesem oberen Abschnitt Impulsgeber angeordnet und ausgebildet, um den Drehwinkel bzw. die aktuelle Stellung des Antriebsrads 2' und somit auch die aktuelle Stellung der Hubkurve 2a' zu erfassen. Dadurch kann eindeutig eine Aussage über den Ver- bzw. Entriegelungsstatus getroffen werden.

Im Gegensatz zur ersten Figur weist der Sperrbolzen 3' in dem oberen Abschnitt zwei nicht dargestellte uneinheitliche Nuten auf zwei gegenüberliegenden, planen Seitenflächen auf. Auf einer der beiden gewölbten zum Antriebsrad 2' weisenden Flächen ist noch eine die beiden Nuten verbindende Quernut ausgebildet. Diese drei Nuten ermöglichen eine verwechslungssichere bzw. fail safe Montage eines Betätigers 4', da sich alle drei Nuten unterscheiden. Über diesen Betätiger 4' wird der Sperrbolzen 3' durch die Hubkurve 2a' des Antriebsrads 2' translatorisch bewegt. Aufgrund der Drehbewegung des Antriebsrads 2' wird der Verriegelungsschutz 2c' ebenfalls durch ein Einschwenken der Sperrfläche 2c' in Eingriff mit der Sicherungsnut 3b' gebracht.

In einer nicht gezeigten abgewandelten Ausführungsform ist ein Sperrbolzen 3, 3' als Drehteil aus C45 ausgebildet.

In weiteren Ausführungsformen sind für einen Sperrbolzen 3, 3' sowohl weitere geometrische Formen wie, Würfel, Zylinder, etc., als auch andere Materialien wie Aluminium, faserverstärkter Kunststoffe etc., denkbar. Auch eine integrale Ausführung eines Steuerbolzens bzw. Betätigers 4, 4' mit dem Sperrbolzen 3; 3' ist denkbar.

In einer nicht gezeigten abgewandelten Ausführungsform ist ein Antriebsrad 2, 2' aus einem faserverstärkten Kunststoff im Spritzgussverfahren hergestellt. Aber auch andere Materialien wie Aluminium, Stahlsorten, C45 etc., sind denkbar.

### Bezugszeichenliste

- 1: Elektrische Lenkverriegelung
- 2; 2': Antriebsrad
- 2a; 2a': Nocke; Hubkurve
- 2b; 2b': Verzahnung
- 2c; 2c': Sperrfläche
- 3; 3': Sperrbolzen
- 3a; 3a': Freilaufnut
- 3b; 3b': Sicherungsnut
- 4; 4': Steuerbolzen; Betätiger
- R: Drehachse
- H: Hubbewegungsrichtung

## Patentansprüche

1. Elektrische Lenkverriegelung mit einem Verriegelungsschutz, wobei die Lenkverriegelung
ein elektrisch angetriebenes Antriebsrad (2') zur Betätigung eines translatorisch bewegbaren Sperrbolzens (3') aufweist, wobei der Verriegelungsschutz folgendes aufweist:
ein Sperrelement,
eine spiralförmig ausgebildete Hubkurve (2a') zum Entriegeln des Sperrbolzens (3') und
ein Sicherungselement, das an dem Sperrbolzen (3') als eine Sicherungsnut (3b') ausgebildet ist, wobei der Sperrbolzen (3') zwischen einer Sperrstellung und einer Freigabestellung bewegbar ist, wobei
das Sperrelement an dem Antriebsrad (2') als radial vom Antriebsrad (2') hervorstehende Sperrfläche (2c') ausgebildet ist und in der Freigabestellung mit dem an dem Sperrbolzen (3') angeordneten Sicherungselement in Eingriff steht, um ein unbeabsichtigtes Verriegeln der Lenkverriegelung zu verhindern, wobei das Sperrelement zwischen einer Sperrstellung und einer Freigabestellung beweglich ist, und
die Hubkurve (2a') an dem Antriebsrad (2') angeordnet ist, wobei die Sperrfläche (2c') in einem unteren Abschnitt und die Hubkurve (2a'), angrenzend an einen mittleren Abschnitt, in einem oberen Abschnitt des Antriebsrads (2') vorgesehen ist.

2. Elektrische Lenkverriegelung nach Anspruch 1, wobei die Sperrfläche (2c') mit dem Antriebsrad (2') starr und/oder einstückig ausgebildet ist.

3. Elektrische Lenkverriegelung nach einem der vorhergehenden Ansprüche, wobei sich die Sperrfläche (2c') über einen Bogenwinkel von 30° bis 90°, vorzugsweise 60°, erstreckt.

4. Elektrische Lenkverriegelung nach einem der vorhergehenden Ansprüche, wobei die Hubkurve (2') auf der Außenfläche des Antriebsrads (2') zur Ansteuerung eines Betätigers (4') des Sperrbolzen (3') einstückig ausgebildet ist.

5. Elektrische Lenkverriegelung nach einem der vorhergehenden Ansprüche, wobei auf einer Außenfläche des Antriebsrads (2') eine Verzahnung (2b') für einen verzahnenden Eingriff mit einem schraubenförmig ausgebildeten Getrieberad einstückig ausgebildet ist.

6. Elektrische Lenkverriegelung nach einem der vorhergehenden Ansprüche, wobei die Verzahnung (2b') zwischen der Sperrfläche (2c') und der Hubkurve (2a') ausgebildet ist.

7. Elektrische Lenkverriegelung nach einem der vorhergehenden Ansprüche, wobei eine Schraubendruckfeder, die eine Federkraft mit Wirkrichtung zur Längsachse des Sperrbolzens (3') auf diesen ausübt, sich an dieser Längsachse erstreckend, angeordnet ist.

8. Elektrische Lenkverriegelung nach einem der vorhergehenden Ansprüche, wobei der Durchmesser der Verzahnung (2b') geringer als der Durchmesser der Sperrfläche (2c') ist, so dass die Sperrfläche (2c') radial überstehend gegenüber der Verzahnung 2b' ausgeführt ist.

9. Elektrische Lenkverriegelung nach einem der vorhergehenden Ansprüche, wobei die Höhe der Sicherungsnut (3b') im Wesentlichen der Dicke der Wandstärke der Sperrfläche (2c') entspricht, vorzugsweise noch ein Aufmaß aufweist.

10. Elektrische Lenkverriegelung nach einem der vorhergehenden Ansprüche, wobei die Erstreckung der Sperrfläche (2c') im Wesentlichen senkrecht zur translatorischen Bewegungsrichtung des Sperrbolzens (3') ausgerichtet ist.

11. Elektrische Lenkverriegelung nach einem der vorhergehenden Ansprüche, wobei die Sperrfläche (2c') im Wesentlichen als fächerförmiger Abschnitt radial vom Antriebsrad (2') hervorsteht,

12. Elektrische Lenkverriegelung nach einem der vorhergehenden Ansprüche, wobei der Sperrbolzen (3') parallel zu einer Achse (R') des Antriebsrads (2') bewegbar ist.

13. Elektrische Lenkverriegelung nach einem der vorhergehenden Ansprüche, wobei der Sperrbolzen (3') eine Freilaufnut (3a') aufweist, welche das Sperrelement zwischen einer Sperrstellung und einer Freigabestellung durchquert.

14. Elektrische Lenkverriegelung nach einem der vorhergehenden Ansprüche, wobei die Freilaufnut (3a') und die Sicherungsnut (3b') auf der gleichen Seite des Sperrbolzens (3') ausgebildet sind.

15. Elektrische Lenkverriegelung nach einem der vorhergehenden Ansprüche, wobei die Freilaufnut (3a') ein größere Erstreckung als die Sicherungsnut (3b') aufweist.

## Claims

1. Electric steering lock with a locking safety, wherein the steering lock comprises
an electrically driven driving wheel (2') for actuating a translationally movable locking bolt (3'), wherein the locking safety comprises:
a blocking member,
a helical shaped lifting cam (2a') for unlocking the locking bolt (3') and
a securing member, which is formed on the locking bolt (3') as a securing groove (3b'), wherein the locking bolt (3') is moveable between a locking position and a release position, wherein
the blocking member on the driving wheel (2') is radially formed on the driving wheel (2') as a projecting blocking surface (2c') and is engaged with the securing member arranged on the locking bolt (3') in the release position, against unintentional locking of the steering lock, wherein the blocking member is moveable between a locking position and a release position, and
the lifting cam (2a') is arranged on the driving wheel (2'), wherein the blocking surface (2c') is provided in a lower portion, and the lifting cam (2a'), adjacent to a central portion, is provided in an upper portion of the driving wheel (2').

2. Electric steering lock according to claim 1, wherein the blocking surface (2c') is rigidly and / or integrally formed with the driving wheel (2').

3. Electric steering lock according to any one of the preceding claims,
wherein the blocking surface (2c') extend over an arc angle of 30 ° to 90 °, preferably 60 °.

4. Electric steering lock according to any one of the preceding claims, wherein the lifting cam (2') is integrally formed on the outer surface of the driving wheel (2') to control an actuator (4') of the locking bolt (3').

5. Electric steering lock according to any one of the preceding claims,
wherein a gearing (2b') is integrally formed on an outer surface of the driving wheel (2 ') for an interlocking engagement with a helically shaped gear.

6. Electric steering lock according to any one of the preceding claims,
wherein the gearing (2b') is formed between the blocking surface (2c') and the lifting cam (2a').

7. Electric steering lock according to any one of the preceding claims,
wherein a helical compression spring, which exerts a spring force acting in direction to the longitudinal axis of the locking bolt (3') thereto, is arranged extending in the longitudinal axis.

8. Electric steering lock according to any one of the preceding claims, wherein the diameter of the gearing (2b') is less than the diameter of the blocking surface (2c'), so that the blocking surface (2c') is formed radially protruding with respect to the gearing (2b').

9. Electric steering lock according to any one of the preceding claims, wherein the height of the securing groove (3b') essentially corresponds to the thickness of the wall, preferably has an overmeasure.

10. Electric steering lock according to any one of the preceding claims, wherein the extension of the blocking surface (2c') is substantially perpendicular oriented to the translational movement direction of the locking bolt (3').

11. Electric steering lock according to any one of the preceding claims, wherein the blocking surface (2c') is essentially protruding as a fan-shaped portion radially from the driving wheel (2').

12. Electric steering lock according to any one of the preceding claims, wherein the locking bolt (3') is movable parallel to an axis (R') of the driving wheel (2 ')

13. Electric steering lock according to any one of the preceding claims, wherein the locking bolt (3') has a freewheel (3a') which passes through the blocking member between a locking position and a release position.

14. Electric steering lock according to any one of the preceding claims, wherein the freewheel (3a') and the securing groove (3b') are formed on the same side of the locking bolt (3').

15. Electric steering lock according to any one of the preceding claims, wherein the freewheel (3a') has a larger length than the securing groove (3b').

## Revendications

1. Verrou de direction électrique muni d'un dispositif de protection contre le verrouillage, dans lequel le verrou de direction
présente une roue d'entraînement entraînée électriquement (2') destinée à actionner un pêne de verrouillage (3') déplaçable en translation, dans lequel le dispositif de protection contre le verrouillage présente :
un élément de blocage,
une came de levage (2a') présentant une forme de spirale pour le déverrouillage du pêne de verrouillage (3') et
un dispositif de sécurité, placé sur le pêne de verrouillage (3') sous forme de rainure de retenue (3b'), le pêne de verrouillage (3') pouvant être déplacé entre une position de blocage et une position de course libre, dans lequel
l'élément de blocage placé sur la roue d'entraînement (2') sous la forme d'une surface de blocage (2c') fait saillie radialement à partir de la roue d'entraînement (2') et est en contact avec le dispositif de sécurité placé sur le pêne de verrouillage (3') en position de course libre afin d'éviter tout verrouillage involonatire, l'élément de blocage pouvant être déplacé entre une position de blocage et une position de course libre, et
la came de levage (2a') est placée sur la roue d'entraînement (2'), la surface de blocage (2c') étant placée dans une section inférieure et la came de levage (2a') de manière adjacente à une section centrale dans une section supérieure de la roue d'entraînement (2').

2. Verrou de direction électrique selon la Revendication 1 dans lequel la surface de blocage (2c') et la roue d'entraînement (2') sont liés de manière rigide et/ou conçus d'un seul tenant.

3. Verrou de direction électrique selon l'une quelconque des Revendications précédentes dans lequel la surface de blocage (2c') se prolonge selon un angle de 30° à 90°, de préférence de 60°.

4. Verrou de direction électrique selon l'une quelconque des Revendications précédentes dans lequel la came de levage (2a') est formée, d'un seul tenant, sur la surface externe de la roue d'entraînement (2') pour l'actionnement d'un dispositif de commande (4') du pêne de verrouillage (3').

5. Verrou de direction électrique selon l'une quelconque des Revendications précédentes dans lequel une denture (2b') est formée, d'un seul tenant, sur une surface externe de la roue d'entraînement (2') pour l'engrènement avec une roue dentée présentant une forme de vis.

6. Verrou de direction électrique selon l'une quelconque des Revendications précédentes dans lequel la denture (2b') se situe entre la surface de blocage (2c') et la came de levage (2a').

7. Verrou de direction électrique selon l'une quelconque des Revendications précédentes dans lequel un ressort hélicoïdal, qui exerce une force sur le pêne de verrouillage (3') avec sens d'action selon l'axe longitudinal de ce dernier, est formé de sorte qu'il s'étend dans la direction de l'axe longitudinal précité.

8. Verrou de direction électrique selon l'une quelconque des Revendications précédentes dans lequel le diamètre de la denture (2b') est inférieur au diamètre de la surface de blocage (2c') de sorte que la surface de blocage (2c') soit formée de manière à longer radialement la denture (2b').

9. Verrou de direction électrique selon l'une quelconque des Revendications précédentes dans lequel la rainure de retenue (3b') présente une hauteur sensiblement identique à l'épaisseur de la paroi de la surface de blocage (2c'), avec de préférence encore une surépaisseur.

10. Verrou de direction électrique selon l'une quelconque des Revendications précédentes dans lequel la projection de la surface de blocage (2c') présente une direction sensiblement verticale par rapport à la direction de mouvement de translation du pêne de verrouillage (3').

11. Verrou de direction électrique selon l'une quelconque des Revendications précédentes dans lequel la surface de blocage (2c'), en tant que section essentiellement en forme d'éventail, se projette radialement à partir de la roue d'entrainement (2').

12. Verrou de direction électrique selon l'une quelconque des Revendications précédentes dans lequel le pêne de verrouillage (3') peut se déplacer parallèlement à un axe (R') de la roue d'entraînement (2').

13. Verrou de direction électrique selon l'une quelconque des Revendications précédentes dans lequel le pêne de verrouillage (3') présente une rainure de course libre (3a') qui traverse l'élément de blocage entre la position de blocage et la position de course libre.

14. Verrou de direction électrique selon l'une quelconque des Revendications précédentes dans lequel la rainure de course libre (3a') et la rainure de retenue (3b') sont placées sur la même face du pêne de verrouillage (3').

15. Verrou de direction électrique selon l'une quelconque des Revendications précédentes dans lequel la rainure de course libre (3a') présente une étendue plus grande que la rainure de retenue (3b').
